(19) Europäisches Patentamt
European Patent Office
Office européen des brevets

(11) EP 3 012 780 A1

(12) EUROPEAN PATENT APPLICATION

(43) Date of publication:
27.04.2016 Bulletin 2016/17

(51) Int Cl.:
G06K 9/46 (2006.01)          G06K 9/62 (2006.01)

(21) Application number: 14306686.8

(22) Date of filing: 23.10.2014

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(71) Applicant: Thomson Licensing
92130 Issy-les-Moulineaux (FR)

(72) Inventors:
• Zepeda Salvatierra, Joaquin
35576 Cesson-Sévigné (FR)
• Kulkarni, Praveen Anil
35576 Cesson-Sévigné (FR)

(74) Representative: Huchet, Anne
Technicolor
1-5 rue Jeanne d'Arc
92130 Issy-Les-Moulineaux (FR)

(54) **A method and apparatus for encoding image features using a differentiable bag-of-words encoder**

(57) A method for processing in an encoder, the method comprising receiving, by the encoder, a set of local descriptors derived from an image, obtaining, by the encoder, K code words, wherein K > 1; and determining, by the encoder, a first element of a bag-of-words image feature vector by using a differentiable function having a difference between each of the local descriptors and one of the K code words as a first parameter, wherein each of the K code words is used in the differentiable function for determining a different element of the bag-of-words image feature vector.

FIG. 6

600

Receiving a set of local descriptors derived from an image, — 605

Obtaining K code words, wherein K > 1 — 610

Determining a first element of a bag-of-words image feature vector by using a differentiable function having a difference between each of the local descriptors and one of the K code words as a first parameter, wherein each of the K code words is used in the differentiable function for determining a different element of the bag-of-words image feature vector — 615

**Description**

TECHNICAL FIELD

The present disclosure generally relates to a new bag-of-words image feature encoder, more particularly to a new bag-of-words encoder having its encoding function differentiable.

BACKGROUND ART

Image search methods can be broadly split into two categories. In the first category, such as *semantic search,* the search system is given a visual concept, and the aim is to retrieve images containing the visual concept. For example, the user might want to find images containing a cat.

In the second category, such as *image retrieval,* the search system is given an image of a scene, and the aim is to find all images of the same scene modulo some task-related transformation. Examples of simple transformations include changes in scene illumination, image cropping or scaling. More challenging transformations include wide changes in the perspective of the camera, high compression ratios, or picture-of-video-screen artifacts.

Common to both semantic search and image retrieval methods is the need to encode the image into a single, fixed-dimensional image feature vector. Many successful image feature encoders have been proposed, and these image feature encoders generally operate on fixed-dimensional local descriptor vectors extracted from densely or sparsely sampled local regions of the image. Such a feature encoder aggregates these local descriptors to produce a higher dimension image feature vector. Examples of such feature encoders include the conventional bag-of-words encoder, the Fisher encoder, and the VLAD encoder. All these encoding methods depend on specific models of the data distribution in the local-descriptor space. For bag-of-words and VLAD, the model is a codebook obtained using *K*-means, while the Fisher encoding is based on a Gaussian Mixture Model (GMM). In both cases, the model defining the encoding scheme is built in an unsupervised manner using an optimization objective unrelated to the image search task.

Recent work has focused on learning the feature encoder model to make it better suited to the task at hand. A natural learning objective to use in this situation is the max-margin objective otherwise used to learn support vector machines. Notably, in Vladyslav Sydorov, Mayu Sakurada, and CH Lampert, Deep Fisher Kernels End to End Learning of the Fisher Kernel GMM Parameters, in Computer Vision and Pattern Recognition, 2014, the system learns the components of the GMM used in the Fisher encoding by optimizing, relative to the GMM mean and variance parameters, the same objective that produces the linear classifier commonly used to carry out semantic search. Approaches based on deep Convolutional Neural Networks (CNNs) can also be interpreted as feature learning methods, and these define the new state-of-the art baseline in semantic search. Indeed Sydorov *et al.* discuss how the Fisher encoder can be interpreted as a deep network, since both consist of alternating layers of linear and non-linear operations.

The main reason why Sydorov *et al* use the Fisher encoder is its differentiability. The bag-of-words model, on the other hand, is not differentiable, yet offers a number of advantages including interpretability and low computational cost. Therefore, it would be desirable to have a differentiable bag-of-words encoder.

BRIEF SUMMARY OF THE INVENTION

In accordance with an aspect of the present invention, a method for processing in an encoder is disclosed. The method comprises receiving, by the encoder, a set of local descriptors derived from an image, obtaining, by the encoder, K code words, wherein K > 1; and determining, by the encoder, a first element of a bag-of-words image feature vector by using a differentiable function having a difference between each of the local descriptors and one of the K code words as a first parameter, wherein each of the K code words is used in the differentiable function for determining a different element of the bag-of-words image feature vector.

In accordance with an aspect of the present invention, an image feature encoder is disclosed. The image feature encoder comprises memory means for storing an image and a set of local descriptors derived from the image; and processing means, characterized in that the processing means is configured to receive a set of local descriptors derived from an image, obtain K code words, wherein K > 1; and determine a first element of a bag-of-words image feature vector by using a differentiable function having a difference between each of the local descriptors and one of the K code words as a first parameter, wherein each of the K code words is used in the differentiable function for determining a different element of the bag-of-words image feature vector.

In one embodiment, the memory means is a memory and the processing means is a processor.

In one embodiment, the differentiable function is a power function with a base of 2 or more, such as an exponential function. The exponential function may have the first parameter a sum of exponential of a norm of the difference between each of the local descriptors and the code word used for determining the first element of the bag-of-words image feature vector. The differentiable function may have a covariance matrix as a second parameter. The differentiable function may include a dividing function dividing the differentiable function by a number of the local descriptors.

In one embodiment, obtaining K code words comprises retrieving the K code words from a memory.

In another embodiment, the code word used for determining the first element of the bag-of-words image feature vector may be updated according to a derivative of the first element of the image feature vector with respect to the code word used for determining the first element of the image feature vector; and the updated code word is used to update the first element of the bag-of-words image feature.

In another embodiment, other bag-of-words image feature vectors are respectively determined in a similar manner for different sets of local descriptors derived from other images, all the determined image feature vectors are used to determine a classifier by optimizing a second function having the bag-of-words image feature vectors and the classifier as parameters, and the classifier is used to classifying an image as including or not including a particular scene.

In yet another aspect of the invention, a non-transitory computer readable medium is disclosed. The non-transitory computer readable medium has stored thereon instructions of program code for executing steps of methods disclosed herein according to the principles of the invention.

The aforementioned brief summary of exemplary embodiments of the present invention is merely illustrative of the inventive concepts presented herein, and is not intended to limit the scope of the present invention in any manner.

BRIEF SUMMARY OF THE DRAWINGS

FIG. 1 depicts an illustrative embodiment of an image feature encoding system 10 according to the principles of the embodiment of the invention;

FIG. 2 depicts an example of using a conventional bag-of-words encoder to produce a bag-of-words image feature vector;

FIG. 3 depicts an example of using a bag-of-words encoder according to the principles of the invention to produce a bag-of-words image feature vector;

FIG. 4 depicts a block schematic diagram of a conventional bag-of-words encoding system 400;

FIG. 5 depicts a block schematic diagram of a bag-of-words encoding system 500 according to the principles of the invention;

FIG. 6 illustrates a process flow 600 for encoding local descriptors derived from an image according to the principles of the embodiment of the invention; and

FIG. 7 illustrates a process flow 700 for searching image content according to the principles of the embodiment of the invention.

DETAILED DESCRIPTION

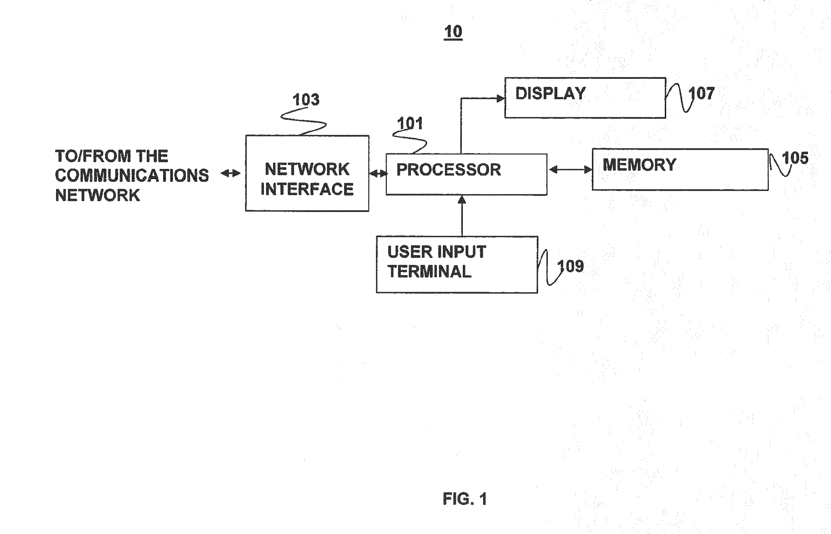

FIG. 1 shows an illustrative embodiment of an image feature encoding system 10 according to the principles of the embodiment of the invention. The image feature encoding system 10 includes a processing means such as processor 101, memory means, such as memory 105, a user input terminal 109, and network interface 103.

The memory 105 stores training images or other images, and other data. The memory 105 also stores software modules, such as, but not limited to, the software/firmware codes implemented according to the principles of the invention. Some of the foregoing elements of FIG. 1 may be embodied using integrated circuits (ICs), and some elements may for example be included on one or more ICs. For clarity of description, certain conventional elements associated with the image feature encoding system 10 such as certain control signals, power signals and/or other elements may not be shown in FIG. 1.

The image feature encoding system 10 may be any device, such as an online server, a cell phone, a PC, a laptop, or a tablet, that requires image feature encoding for, for example, the purpose of searching images for a scene or a visual concept.

The processor 101 may include one or more of processing units, such as microprocessors, digital signal processors, or combination thereof. The processor 101 is operative or configured to execute software/firmware code including software/firmware code for implementing the new image feature encoding function according to the principles of the embodiment of the invention. For example, the processor 101 is operative or configured to encode a set of local descriptors from an image to generate a bag-of-words image feature vector having K elements by obtaining K code words respectively corresponding to different elements of the bag-of-words image feature vector, wherein K > 1; and determining a first element of the bag-of-words image feature vector as a differentiable function of a difference between each of the local descriptors and the code word corresponding to the first element of the K image feature vector. Other elements of the bag-of-words image feature vector can be determined in a similar manner. For another example, the processor 101 is operative or configured to perform image searching by obtaining K code words, wherein K > 1; generating bag-of-words image feature vectors, each having K elements and derived from a different set of local descriptors derived respectively from a different one of N training images, at least one of the N training images comprising a particular scene and at least one not comprising the particular scene, each element of each bag-of-words image feature vector corresponding to a different one of K code words, wherein N > 1, each element of one of the bag-of-words image feature vectors is determined from a differentiable function having a first parameter, which is a difference between each of the set of descriptors from which the one of the bag-of-words image vectors is derived and a corresponding code word; determining a classifier comprising K elements by optimizing a second function having the bag-of-words image feature vectors and the classifier as parameters; and classifying an image as including the particular scene according to the classifier.

The processor 101 is also operative or configured to perform and/or enable other functions of the image feature encoding system 10 including, but not limited to, detecting and responding to user inputs from the user input terminal 109 for operating and/or maintaining the image feature encoding system 10, displaying user menus or instructions, training images or other images, to the display device 107, reading and writing data including images, local descriptors, image feature vectors, constants, matrixes from and to the memory 205, and/or other functions.

The memory 105 is operative to perform data storage functions of the image feature encoding system 10. According to an exemplary embodiment, the memory 205 stores data including, but not limited to, images, local descriptors, image feature vectors, matrixes, image classifiers, software code, and/or other data. The memory 105 may include volatile and/or non-volatile memory regions and storage devices such hard disk drives, DVD drives. A part of memory is a non-transitory program storage device readable by the processor 101, tangibly embodying a program of instructions executable by the processor 101 to perform program steps as described herein according to the principles of the invention.

The network interface 103 is operative or configured to perform network interfacing functions of the image feature encoding system 10. According to an exemplary embodiment, the network interface 103 is operative or configured to receive signals such as images from a server, such as a Google server. The network interface 103 may include wireless, such as WI_FI, and/or wired, such as Ethernet, interfaces.

The inventors recognize that the gradient of the encoded image feature is necessary to learn the model for a specific task and derive a differentiable bag-of-words encoder. The proposed bag-of-words formulation is an approximation to conventional bag-of-words formulation, and the performance in semantic search is nonetheless comparable with that of the conventional bag-of-words formulation.

In accordance with an aspect of the present principles, a new bag-of-words encoding method and apparatus makes use of the new bag-of-words encoding method are disclosed. Before proceeding to describe the new bag-of-words encoding method of the present principles, the following discussion on notation will prove useful.

Scalars, vectors and matrices are denoted, respectively, using standard, bold, and uppercase-bold typeface (e.g., scalar a, vector a and matrix A). The symbol $\mathbf{v}_k$ denotes a vector from a sequence $\mathbf{v}_1, \mathbf{v}_2, ..., \mathbf{v}_N$, and $v_k$ denotes the $k$-th coefficient of vector v. The symbol $[a_i]_i$ (respectively, $[a_{i,j}]_{i,j}$) denotes concatenation of scalars $a_i$ ($a_{i,j}$) to form a single vector (matrix). Finally, the symbol $\dfrac{\partial \mathbf{y}}{\partial \mathbf{x}}$ denotes the Jacobian matrix with $(i, j)$-th entry $\dfrac{\partial y_i}{\partial x_j}$.

In the following, the semantic search approach is used as an example for explaining the state-of-the-art approach for feature learning. The present principles of the invention can also be applied to the image retrieval approach. In the context of a binary classification problem, a set of N training images is given and from which a training set of annotated images $\{I_i, y_i\}_i$, $y_i \in \{1, -1\}$ are obtained in a conventional manner, where index, i, ranges from 1 to N, N > 1. At least one training images contain a particular visual concept, such as a rat, and at least one does not. For a training image containing the particular concept, $y_i$ is assigned to 1 and for a training image that does not contain the particular concept, $y_i$ is assigned to -1. Each annotated image $I_i$ consists of a set of local descriptors $\left\{\mathbf{s}_j \in \mathbb{R}^d\right\}_{j=1}^{M_i}$ which are encoded to produce an image feature vector $\mathbf{x}(\Theta; I_i) \in \mathbb{R}^D$ (or simply $x_i(\Theta)$), where $s_j$ is a vector of size d and $x_i$ is a vector of size D. The symbol $M_i$ represents the total number of local descriptors in annotated image $I_i$. The encoding process depends on the parameters represented by $\Theta$. For example, for the case of bag-of-words encoding, $\Theta$ represents the codebook; for Fisher encoding, $\Theta$ represents all the GMM parameters.

The encoded feature vectors are used to learn a linear classifier, w, which is a vector having the same number of elements as an image feature vector, by minimizing the following function:

$$R(\mathbf{w}, \Theta) = \frac{\lambda}{2} |\mathbf{w}|^2 + \frac{1}{N} \sum_i C\left(y_i(\mathbf{w}^{\mathrm{T}} \mathbf{x}_i(\Theta) + b)\right), \qquad (1)$$

where $C(z)$ can denote the hinge loss max(0,1-z) or logistic loss $\frac{1}{\exp(-z)+1}$, and $N$ is the total number of training images.

According to the principles of the embodiment of the invention, feature learning is performed by jointly learning w and $\Theta$ so as to minimize this same cost:

$$\operatorname{argmin}_{\mathbf{w},\Theta} R(\mathbf{w},\Theta). \qquad (2)$$

In one embodiment, a Stochastic Gradient Descent (SGD)-based block-coordinate descent approach is used to optimize equation (1), where one or more SGD steps are first applied to optimize with respect to w, and subsequently to optimize with respect to $\Theta$. This can be explored experimentally.

In order to obtain the SGD update rule for equation (2) with respect to $\Theta$, equation (1) is re-written as

$$R(\mathbf{w},\Theta) = \frac{1}{N} \sum_i r(\mathbf{w}, y_i, I_i, \Theta), \text{ where} \qquad (3)$$

$$r(\mathbf{w}, y, I, \Theta) = N\frac{\lambda}{2}|\mathbf{w}|^2 + C\left(y(\mathbf{w}^\mathrm{T}\mathbf{x}(\Theta; I) + b)\right). \qquad (4)$$

Letting $\frac{\partial \mathbf{f}}{\partial \mathbf{g}} = \left[\frac{\partial f_i}{\partial g_j}\right]_{i,j}$ denote the Jacobian of a possibly vector-valued function f with respect to its parameters g, the SGD update rule for the optimization with respect to $\Theta$ in equation (1) is

$$\Theta_{t+1} = \Theta_t - \lambda_t \left.\frac{\partial r(\mathbf{w}, y_i, I_i, \Theta)}{\partial \Theta}\right|_{\Theta_t}^{\mathrm{T}}. \qquad (5)$$

The partial derivative $\frac{\partial \mathbf{r}}{\partial \Theta}$ can be obtained via back-propagation as follows:

$$\frac{\partial \mathbf{r}}{\partial \Theta} = \frac{\partial C}{\partial z} \cdot y_i \mathbf{w}^\mathrm{T} \cdot \frac{\partial \mathbf{x}}{\partial \Theta}, \qquad (6)$$

where $\frac{\partial C}{\partial z}$ depends on the penalty function $C(z)$ used, and $\frac{\partial \mathbf{x}}{\partial \Theta}$ depends on the encoding function used. Since $\Theta$ represents more than one parameter, the partial derivative can be done per parameter.

In the codebook learning for bag-of-words encoding, the parameters includes code words in a codebook, $\Theta = [c_k]k$, where $c_k$. is a code word, which is a vector.

Let $C_k$ denote the Voronoi cell associated with code word $c_k$, and define an indicator function as follows:

$$v_{k,\epsilon}(\mathbf{s}) = \begin{cases} 1 & \text{if } \mathbf{s} \in \mathcal{C}_k, \\ \epsilon & \text{otherwise }, \end{cases} \qquad (7)$$

Then we can write the conventional bag-of-words encoding function as

$$\mathbf{x}^{BOW} = \left[\frac{1}{M} \sum_j \lim_{\epsilon \to 0} \int_{\mathbb{R}^d} v_{k,\epsilon}(\mathbf{s})\delta(\mathbf{s} - \mathbf{s}_j)\mathrm{d}\mathbf{s}\right]_k \qquad (8)$$

where $x^{Bow}$ denotes the conventional bag-of-words image feature vector, which is a vector, derived from local descriptors of an image, and *M* is the total number of local descriptors of that image.

It is clear that equation (8) is not differentiable with respect to a code word, $c_k$. According the principles of the invention, an approximation of equation (8) is provided, so that the equation becomes differentiable. One example of the approximation is to substitute $u_{k,\epsilon}(s)$ in equation (8) by a differentiable function. This substituted differentiable function should preserve the concept of a bag, e.g., the cell as used in equation (7). Examples of such differentiable functions are power functions with a base of 2 or more, such as an exponential function. Although the bags under a substituted differentiable function may overlap with one another, a substituted differentiable function provides more weight for a local descriptor closer to the code word associated with a bag. As such, a local descriptor has the stronger association with the closest code word and the concept of a bag is preserved. In the following example, the substituted differentiable function is an un-normalized Gaussian $\exp\left(-(\mathbf{s}-\mathbf{c}_k)^{\mathrm{T}}\mathbf{R}_k^{-1}(\mathbf{s}-\mathbf{c}_k)\right)$, where $R_k$ is a covariance matrix or the correlation matrix, which is element dependent. By doing so, equation (8) can be rewritten as follows:

$$\mathbf{x}^{exp} = \frac{1}{M}\left[\sum_j \exp\left(-(\mathbf{s}_j - \mathbf{c}_k)^{\mathrm{T}}\mathbf{R}_k^{-1}(\mathbf{s}_j - \mathbf{c}_k)\right)\right]_k \qquad (9)$$

$x^{exp}$ represents the bag-of-words image feature vector encoded using equation (9), which is a function of a difference between each of the local descriptors derived from an image and a corresponding code word k according to the principles of the invention. Element k of $x^{exp}$ is associated with the code word $c_k$ and each element $x^{exp}$ can be computed sequentially or at the same time along with one or more elements. The resulting representation has the advantage that it is differentiable and that its derivatives with respect to $c_k$ and $R_k$ are non-zero almost everywhere. In order to (1) enforce the positive-definiteness of $\mathbf{R}_k^{-1}$ and (2) avoid differentiating with respect to a matrix inverse, we let $\mathbf{R}_k^{-1} = \mathbf{Q}_k\mathbf{Q}_k^{\mathrm{T}}$ and differentiate with respect to $Q_k$. In this case, parameters represented by $\Theta$ include code words $c_k$ and matrixes $Q_k$. The Jacobian $\frac{\partial \mathbf{x}}{\partial \Theta}$ required in equation (6) for $\Theta = c_k$ or $Q_k$ is given below (note that $\frac{\partial x_j}{\partial \mathbf{c}_k} = \mathbf{0}^T$ and $\frac{\partial x_j}{\partial \mathbf{Q}_k} = \mathbf{0}$ for $j \neq k$):

$$\frac{\partial x_k}{\partial \mathbf{c}_k} = 2\mathbf{R}_k^{-1}\left(\bar{\mathbf{s}}_k - \bar{\gamma}_k\mathbf{c}_k\right) \qquad (10)$$

$$\frac{\partial x_k}{\partial \mathbf{Q}_k} = -2\bar{\Sigma}_k\mathbf{Q}_k, \qquad (11)$$

where we have used the following definitions for convenience

$$\gamma_{ik} = \exp\left(-(\mathbf{s}_i - \mathbf{c}_k)\mathbf{R}_k^{-1}(\mathbf{s}_i - \mathbf{c}_k)\right), \qquad (12)$$

$$\bar{\gamma}_k = \frac{1}{N}\sum_i \gamma_{ik}, \qquad (13)$$

$$\bar{\mathbf{s}}_k = \frac{1}{N}\sum_i \gamma_{ik}\mathbf{s}_i, \qquad (14)$$

$$\bar{\boldsymbol{\Sigma}}_k = \frac{1}{N} \sum_i \gamma_{ik} (\mathbf{s}_i - \mathbf{c}_k)(\mathbf{s}_i - \mathbf{c}_k)^T. \tag{15}$$

The expression (6) using (10), summed over all samples and set to a 0 vector, produces the following expression (where $\alpha_i$ are constants depending on $y_i$)

$$\mathbf{c}_k = \frac{\sum_i \alpha_i \frac{2}{N_i}}{\sum_i \alpha_i \frac{2}{N_i} \bar{\gamma}_k} \cdot \bar{\mathbf{s}}_k, \tag{16}$$

where $\bar{s}_k$ is given in (14). Using (11) in the same manner suggests that the $Q_k$ should be singular.

Plugging our proposed approximate bag-of-words model into the learning machinery described in equations (3)-(6) results in a non-convex optimization problem, and in this model, the initialization of the model is important. In fact, if the initialized *(i.e., before learning")* approximate bag-of-words model produces results that are substantially equal to the results of the conventional (non-approximate bag-of-words) model, then it is guaranteed that the learning process will yield significant improvements. Hence the initialization scheme affects the results. We describe the proposed initialization scheme here and show in Table 1 that the proposed approximation using exponential weighting according to the principles of the embodiment of the invention indeed produces results that are substantially equal to the conventional bag-of-words feature encoder. The results displayed in Table 1 are for class *cow* of the Pascal Visual Object Classes (VOC) dataset.

TABLE 1

| Model | Avg. Prec. | Prec. @ 10 |
|---|---|---|
|  |  |  |
| Proposed approx. | 9.05 % | 18.18 % |
| Bag-of-words | 9.87 % | 18.18 % |

Our proposed initialization is carried out by first learning a codebook using *K*-means. In this embodiment, a user specifies the number of code words $c_k$, for example, L, i.e., k from 1 to L, to the K means algorithm and input all the local descriptors of the N training images. The algorithm then randomly selects L local descriptors as L code words. Then, the algorithm assigns each of all the local descriptors to the closest code word and substitutes each code word $c_k$ by the mean vector of all the local descriptors, $s_j$, assigned to it. The algorithm iterates until a difference, such as Euclidean distance, between the present result and the previous result is below a threshold.

According to the principles of the embodiment of the invention, the resulting $c_k$ from the K means algorithm are used as initial code words, and the correlation matrices are initialized according to the following formula:

$$\mathbf{R}_k = \alpha_k \mathbf{R}'_k,$$

where the $\mathbf{R}'_k$ are the empirical covariance (correlation) matrices computed using $\{s_j | s_j \in C_k\}$ in a conventional manner. The scale factors $\alpha_k$ ensures that, at initialization time, an adequate amount of samples $s_j$ produces a non-negligible weight in the summations of (9). They can be chosen by means of a numerical optimization to satisfy the following equation:

$$\frac{1}{N} \sum_i \mathbf{x}_i^{BOW} = \frac{1}{N} \sum_i \mathbf{x}_i^{exp} \tag{17}$$

The two averages need not be exactly the same. As long as they are substantially the same, it is sufficient. In one embodiment, a user is allowed to specify the maximum allowable difference, such as the Euclidean distance, between the two average image feature vectors.

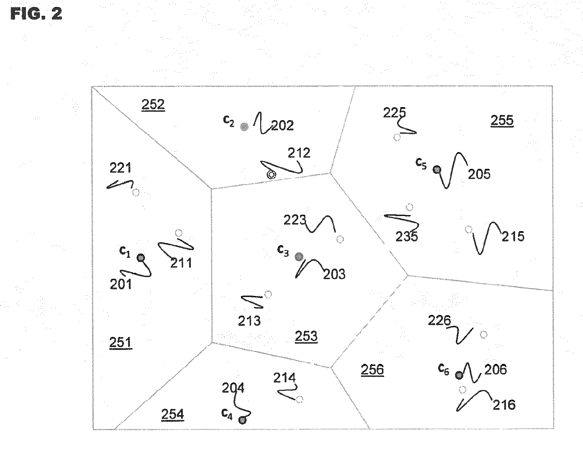

FIG. 2 illustrates an example of using a conventional bag-of-words encoder employing encoding function defined in equation (8). In this example, the total number of the local descriptors, $s_j$, from a training image is 11, which are local descriptors 211-216 and 221, 223, 225, 226, and 235. The 11 local descriptors are assigned to 6 cells, 251-256, according to proximity to code words 201-206. The resulting $x^{Bow}$ is $[2, 1, 2, 1, 3, 2]^T/11$. The conventional feature encoder is not differentiable because if code words c2 or c3 has an infinitesimal jump, entries 2 and 3 in $x^{Bow}$ jump in a non-continuous manner. This is because the assignments of the local descriptors change.

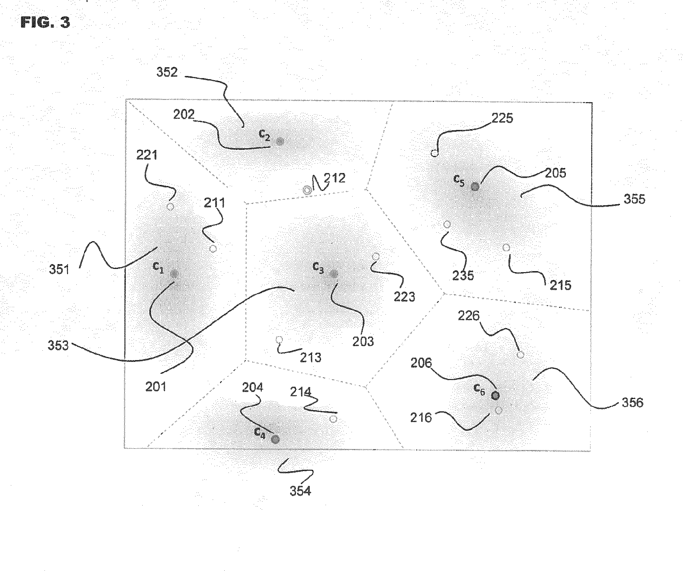

FIG. 3 illustrates the same example but using the proposed approximation using exponential weighting encoder as defined in equation (9) according to the principles of the embodiment of the invention. The 11 local descriptors 211-216 and 221, 223, 225, 226, and 235, and the six code words 201-206 are the same as those shown in FIG. 1. Under this new encoding, no predefined cells are needed. The 6 cells bounded by dotted lines shown in FIG. 3 are for illustration purposes only. Instead, a concept of "exponential box" (an ellipse) is used, which is just a soft weight that tapers from 1 at the code word $c_k$ to 0 at infinity at an angularly dependent rate. As such, the concept of a bag is still preserved even though the exponential boxes may overlap one another. The shape of the ellipses or the exponential boxes 351-356 is determined by the correction matrix $R_k$. Computing the k-entry of $x^{exp}$ in equation (9) using this example amounts to summing the weights given by the corresponding exponential box k at all local descriptors. A weight in this example is the exponential term in equation (9). The encoder according to the principles of the embodiment of the invention is differentiable because infinitesimal jumps in the code words of the correlation matrices result in infinitesimal jumps in the feature vector entries.

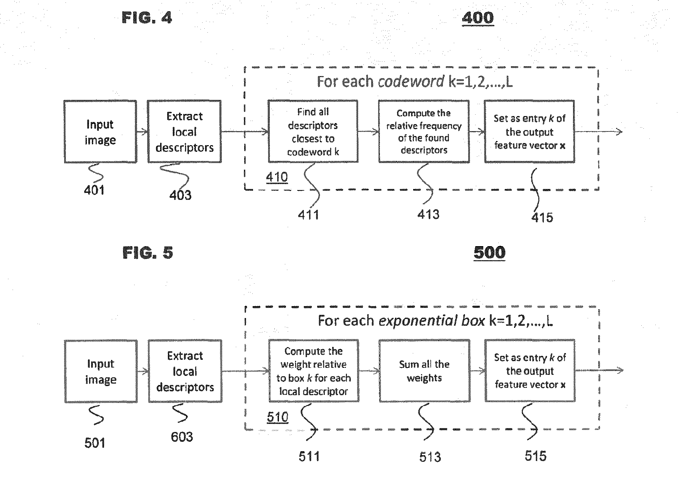

FIG. 4 depicts a block schematic diagram of a conventional bag-of-words encoding system 400 for encoding local descriptors into a bag-of-words image feature vector. The system 400 includes an input block 401 for inputting training images, an extractor 403 for extracting local descriptors for each input training image, and a conventional bag-of-words encoder 410 for encoding the local descriptors into a bag-of-words image feature vector. The conventional bag-of-words encoder 410 includes a module 411 for finding all descriptors closest to code word k, a module 413 for computing the relative frequency of the found descriptors, and a module 415 for setting as entry k of the output image feature vector x.

FIG. 5 depicts a block schematic diagram of an encoding system 500 according to the principles of the embodiment of the invention for encoding local descriptors into a bag-of-words image feature vector. The system 500 includes an input block 501 for inputting training images, an extractor 503 for extracting local descriptors for each input training image, and an encoder 510 according to the principles of the invention for encoding the local descriptors into a bag-of-words image feature vector. The input block 501 may be a module executed by processor 101 to retrieve training images stored in memory 105 or from a USB interface for retrieving the training images stored in a USB storage device. The extractor 503 may be a module executed by the processor 101 using a conventional algorithm such as Scale-invariant feature transform (SIFT). The new bag-of-words encoder 510 includes a module 511 for computing the weight relative to box k for each local descriptor, a module 513 for summing all the weights, and a module 515 for setting as entry k of the output image feature vector x. The weights as used in FIG. 5 is the term $\exp\left(-(\mathbf{s} - \mathbf{c}_k)^{\mathrm{T}}\mathbf{R}_k^{-1}(\mathbf{s} - \mathbf{c}_k)\right)$ in equation (9).

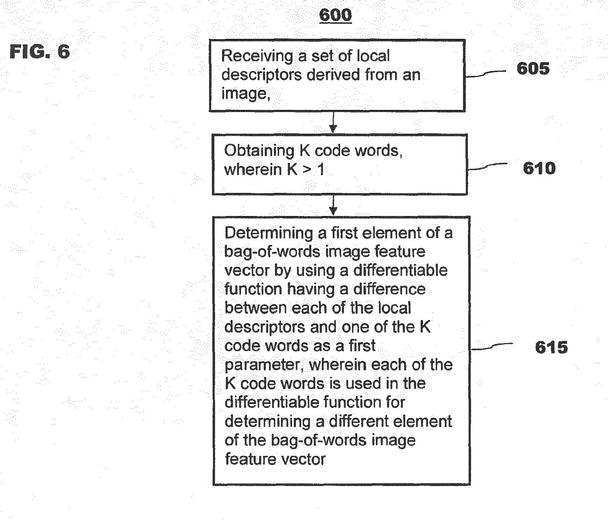

FIG. 6 illustrates a process flow 600 executed by the processor 101 for encoding a set of local descriptors derived from an image, such as a training image or an image to be searched or another type of image, to generate a bag-of-words image feature vector according to the principles of the embodiment of the invention. At step 605, the processor 101 is operative or configured to receive the set of local descriptors. The set of local descriptors may be saved in the memory 101 and the processor 101 receives the set by retrieving the set from the memory 105. The set of local descriptors may be derived from the image by the processor 101 or by an external device. At step 610, the processor 101 is operative or configured to obtain K code words, wherein K > 1. The obtained K code words may be initially generated by an external device or the processor 101, and are stored in the memory 105. For example, the processor 101 may be operative or configured to generate the initial K code words by extracting the local descriptors from a set of N images, wherein N > 1; and randomly select K local descriptors from the obtained local descriptors as the K code words. In the generating step, the processor 101 may be operative or configured to further update each code word by performing the following two steps: assigning each of the local descriptors from the set of N training images to a closest code word; and substituting a particular code word by the mean of all local descriptors assigned to the particular code word. Thus, the particular code word is the mean vector of all the local descriptors assigned to the particular code word. The assigning and substituting steps can be repeated until a threshold is met. For example, the threshold can be a predefined difference between the current set of code words and the code words from the previous iteration. The predefined difference can be a Euclidean distance between the current set of code words and the previous set of code words. The process of generating the initial K code words done by an external device is similar. The processor 101 may obtain the initial K code words from the network interface 103 or obtain the K code words from the memory 105. Whether the initial K code words are generated by the processor 101 or an external device, the K code words are stored in the memory 105 and obtained by the processor 101 by retrieving them from the memory 105.

At step 615, the processor 101 is operative or configured to determine a first element of a bag-of-words image feature vector by using a differentiable function having a difference between each of the local descriptors and one of the K code words as a first parameter, wherein each of the K code words is used in the differentiable function for determining a different element of the bag-of-words image feature vector. Other elements of the image feature vector may be determined in a similar manner. In one embodiment, the differentiable function includes an exponential function. In another embodiment, the differentiable function has a sum of exponential of a norm of the difference between each of the local descriptors and the code word used for determining the first element of the bag-of-words image feature vector as the first parameter. In yet another embodiment, the differentiable function further has a covariance matrix as a second parameter. The differentiable function can include a dividing function dividing the differentiable function by the number of local descriptors. In yet another embodiment, the differentiable function is the one shown in equation (9). In yet another embodiment, the differentiable function is a power function with a base of 2 or more.

According to the principles of the embodiment of the invention, a code word in the memory 105 may be updated according to a rule. For example, a code word can be updated according to the a gradient or a derivative of the element of the image feature vector determined by using the code word with respect to the code word, such as the one specified in equation (5), and the steps 615 and/or 610 are repeated to update the element of the bag-of-words image feature vector using the updated code word. The gradient or the derivative can be obtained using equation (10). As such, the code word can be optimized according to the principles of the embodiment of the invention. Even though the processor 101 obtains the initial K code words generated from an external device, the processor 101 may update the code words in the memory 105 and in the next iteration obtain the code words by retrieving the updated code word from the memory 105.

In one embodiment, the differentiable function further has a covariance matrix, $Q_k$, as a parameter. A different covariance matrix is used in the differentiable function to determine a different element of the bag-of-words image feature vector. In this embodiment, the covariance matrix, $Q_k$, can be updated according to a gradient or derivative of the element of the image feature vector determined by using the covariance matrix, $Q_{k'}$, such as the one specified in equation (5) where $Q_k$ is one of the parameters, $\Theta$, and the updated covariance matrix is used to update the element of the bag-of-words image feature vector. The gradient or the derivative can be obtained using equation (11). Thus, both the code words and the covariance matrixes can be optimized according to the principles of the embodiment of the invention. Other elements of the image feature vector can be determined in a similar manner.

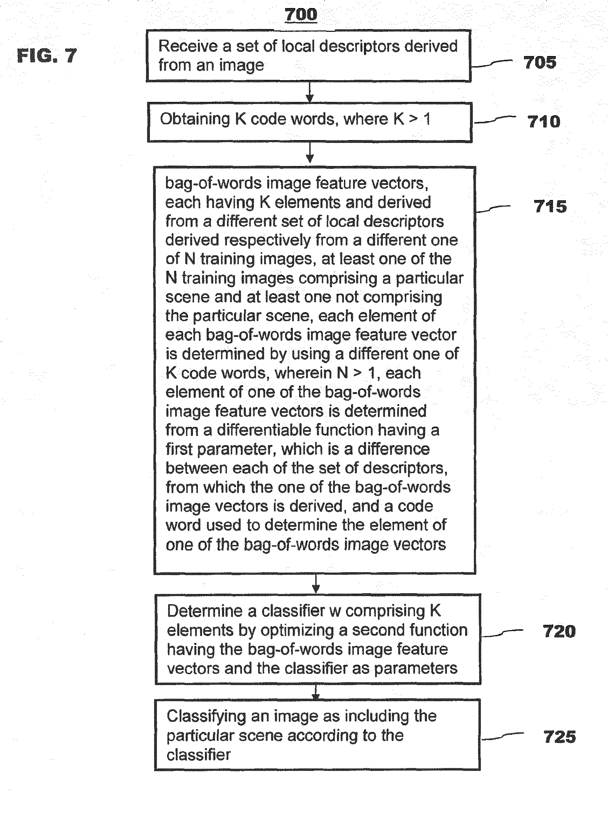

FIG. 7 illustrates a process flow 700 executed by the processor 101 for searching image content according to the principles of the embodiment of the invention. At step 705, the processor 101 is operative or configured to receive a set of local descriptors derived from an image. The set of local descriptors may be derived from the image by the processor 101 or by an external device. At step 710, the processor 101 is operative or configured to obtain K code words where K > 1. As in the process 600, the processor 101 can obtain the K code words from the network interface 103 or by retrieving the K code words from the memory 105. The initial K code words in the memory 105 may be generated by the processor 101 or by an external device and provided to the image feature encoding system 10, as described above with respect to process 600.

At step 715, the processor 101 is operative or configured to generate bag-of-words image feature vectors, each having K elements and derived from a different set of local descriptors derived respectively from a different one of N training images, at least one of the N training images comprising a particular scene and at least one not comprising the particular scene, each element of each bag-of-words image feature vector is determined by using a different one of K code words, wherein N > 1, each element of one of the bag-of-words image feature vectors is determined from a differentiable function having a first parameter, which is a difference between each of the set of descriptors, from which the one of the bag-of-words image vectors is derived, and a code word used to determine the element of one of the bag-of-words image vectors.

In one embodiment, the particular scene is a visual concept and a user can just type in the visual concept, such as a cat, and the system will search images containing the visual concept. In another embodiment, the particular scene is an image of a scene and the system will search for images containing the scene modulo some task-related transformation.

In one embodiment, the differentiable function includes power function with a base of 2 or more, such as but not limited to an exponential function. In another embodiment, the differentiable function has a sum of exponential of a norm of the difference between each of the local descriptors and the code word used to the element of the image feature vector as a parameter. In yet another embodiment, the differentiable function further has a covariance matrix as a parameter. The differentiable function can include a dividing function dividing the differentiable function by the number of local descriptors. In yet another embodiment, the differentiable function is the one shown in equation (9).

At step 720, the processor 101 is operative or configured to determine a classifier w comprising K elements by optimizing a second function having the bag-of-words image feature vectors and the classifier as parameters. In one embodiment, the function defined in equation (1) or (2) is the second function.

In one embodiment, the processor 101 is further operative or configured to compute a gradient or derivative of a first element of a first one of the bag-of-words image feature vectors with respect to a first one of code words used to determine the first element of the first one of the bag-of-words image vectors; update the first one of the code words in the memory 105 according to the derivative; re-determine the first element of the first one of the image feature vectors, and re-compute the classifier w with the updated first element of the first one of the image feature vectors and others elements of the first one of the image feature vectors.. An example of computing a derivative is shown in equation (10), an example of updating the code word is shown in equation (5) where the code word is one of the parameters, $\Theta$, and an example of re-computing the classifier w is shown in equation (1) or (2). Other code words can be updated in a similar manner and the classifier is re-computed accordingly. As such, a code word can be optimized according to the principles of the embodiment of the invention.

In another embodiment, the differentiable function further has a covariance matrix, $Q_k$, as a second parameter. A different covariance matrix is used in the differentiable function to determine a different element of one of the bag-of-words image feature vectors. The processor 101 is further operative or configured to compute a gradient or derivative of a first element of a first one of the bag-of-words image feature vectors with respect to a covariance matrix, $Q_k$, used to determine the first element of the first one of the bag-of-words image vectors; update a covariance matrix, $Q_k$, in the memory 105 according to the derivative; re-determine the first element of the first one of the image feature vectors, and re-compute the classifier w with the updated first element of the first one of the image feature vectors and others elements of the first one of the image feature vectors. An example of computing a derivative is shown in equation (11), an example of updating the a covariance matrix, $Q_k$, is shown in equation (5) where $Q_k$ is one of the parameters, $\Theta$, and an example of re-computing the classifier w is shown in equation (1) or (2). Other covariance matrixes can be updated in a similar manner and the classifier is re-computed accordingly. As such, both a code word and a covariance matrix can be optimized according to the principles of the embodiment of the invention.

At step 725, the processor 101 is operative or configured to classify an image as including the particular scene according to the classifier. For example, if the dot product of the classifier and the image feature vector of the image is positive, the image is classified to contain the particular scene, and if the dot product is not positive, the image is classified to not contain the particular scene.

In another embodiment, a covariance matrix is a function of an empirical matrix computed from the local descriptors assigned to or associated with a first code word used to determine the same element of a bag-of-words image feature vector as the covariance matrix. The covariant matrix may be a product of a constant and the empirical matrix. The constant is a scale factor, which is selected to ensure that at the initialization, the local descriptors produce a non-negligible weight in the summations defined in equation (9). In one embodiment, the constant is selected such that an average of image feature vectors derived using a conventional bag-of-words encoding technique is substantially the same as an average of the bag-of-words image feature vectors derived according to the principles of the embodiment of the invention, as shown in equation (17). In one embodiment, the covariance matrix is singular.

The implementations described herein may be implemented in, for example, a method or a process, an apparatus, a software program, a data stream, or a signal. Even if only discussed in the context of a single form of implementation (for example, discussed only as a method or a device), the implementation of features discussed may also be implemented in other forms (for example a program). An apparatus may be implemented in, for example, appropriate hardware, software, and firmware. The methods may be implemented in, for example, an apparatus such as, for example, a processor, which refers to processing devices in general, including, for example, a computer, a microprocessor, an integrated circuit, or a programmable logic device. Processors also include communication devices, such as, for example, Smartphones, tablets, computers, mobile phones, portable/personal digital assistants ("PDAs"), and other devices that facilitate communication of information between end-users.

Implementations of the various processes and features described herein may be embodied in a variety of different equipment or applications, particularly, for example, equipment or applications associated with data encoding, data decoding, view generation, texture processing, and other processing of images and related texture information and/or depth information. Examples of such equipment include an encoder, a decoder, a post-processor processing output from a decoder, a pre-processor providing input to an encoder, a video coder, a video decoder, a video codec, a web server, a set-top box, a laptop, a personal computer, a cell phone, a PDA, and other communication devices. As should be clear, the equipment may be mobile and even installed in a mobile vehicle.

Additionally, the methods may be implemented by instructions being performed by a processor, and such instructions (and/or data values produced by an implementation) may be stored on a processor-readable medium such as, for example, an integrated circuit, a software carrier or other storage device such as, for example, a hard disk, a compact diskette ("CD"), an optical disc (such as, for example, a DVD, often referred to as a digital versatile disc or a digital video disc), a random access memory ("RAM"), or a read-only memory ("ROM"). The instructions may form an application program tangibly embodied on a processor-readable medium. Instructions may be, for example, in hardware, firmware, software, or a combination. Instructions may be found in, for example, an operating system, a separate application, or a combination of the two. A processor may be characterized, therefore, as, for example, both a device configured to carry out a process and a device that includes a processor-readable medium (such as a storage device) having instructions for carrying out a process. Further, a processor-readable medium may store, in addition to or in lieu of instructions, data values produced by an implementation.

As will be evident to one of skill in the art, implementations may produce a variety of signals formatted to carry information that may be, for example, stored or transmitted. The information may include, for example, instructions for performing a method, or data produced by one of the described implementations. For example, a signal may be formatted to carry as data the rules for writing or reading the syntax of a described embodiment, or to carry as data the actual syntax-values written by a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

A number of implementations have been described. Nevertheless, it will be understood that various modifications may be made. For example, elements of different implementations may be combined, supplemented, modified, or removed to produce other implementations. Additionally, one of ordinary skill will understand that other structures and processes may be substituted for those disclosed and the resulting implementations will perform at least substantially the same function(s), in at least substantially the same way(s), to achieve at least substantially the same result(s) as the implementations disclosed. Accordingly, these and other implementations are contemplated by this application.

**Claims**

1. A method for processing in an encoder, **characterized by**:

    receiving (605), by the encoder, a set of local descriptors derived from an image,
    obtaining (610), by the encoder, K code words, wherein K > 1; and
    determining ( 615), by the encoder, a first element of a bag-of-words image feature vector by using a differentiable function having a difference between each of the local descriptors and one of the K code words as a first parameter, wherein each of the K code words is used in the differentiable function for determining a different element of the bag-of-words image feature vector.

2. The method of claim 1, wherein the differentiable function includes an exponential function.

3. The method of claim 1, wherein the differentiable function has a sum of exponential of a norm of the difference between each of the local descriptors and the code word used for determining the first element of the bag-of-words image feature vector as the first parameter.

4. The method of claim 3, wherein the differentiable function further has a covariance matrix as a second parameter.

5. The method of claim 4, wherein the differentiable function further includes a dividing function dividing the differentiable function by a number of the local descriptors.

6. The method of claim 1, wherein the step of obtaining K code words comprises retrieving the K code words from a memory.

7. The method of claim 1, further comprising
    updating the code word used for determining the first element of the bag-of-words image feature vector according to a derivative of the first element of the image feature vector with respect to the code word used for determining the first element of the image feature vector; and
    repeating the determining step with the updated code word.

8. A non-transitory computer readable medium having stored thereon instructions of program code for executing steps of the method according to one of claims 1 to 7, when said program is executed on a computer.

9. An image feature encoder comprising:

    memory means (105) for storing an image and a set of local descriptors derived from the image; and
    processing means (101), **characterized in that** the processing means (101) is configured to receive a set of local descriptors derived from an image, obtain K code words, wherein K > 1; and determine a first element of a bag-of-words image feature vector by using a differentiable function having a difference between each of the local descriptors and one of the K code words as a first parameter, wherein each of the K code words is used in the differentiable function for determining a different element of the bag-of-words image feature vector.

10. The image feature encoder of claim 9, wherein the differentiable function includes an exponential function.

11. The image feature encoder of claim 9, wherein the differentiable function has a sum of exponential of a norm of the difference between each of the local descriptors and the code word used for determining the first element of the bag-of-words image feature vector as the first parameter.

12. The image feature encoder of claim 11, wherein the differentiable function further has a covariance matrix as a second parameter.

13. The image feature encoder of claim 12, wherein the differentiable function further includes a dividing function dividing the differentiable function by a number of the local descriptors.

14. The image feature encoder of claim 10, wherein the processing means (101) is configured to obtain K code words by retrieving the K code words from the memory means.

15. The image feature encoder of claim 8, wherein the processing means (101) is also configured to update the code word used for determining the first element of the bag-of-words image feature vector according to a derivative of the first element of the image feature vector with respect to the code word used for determining the first element of the image feature vector; and repeat the determining step with the updated code word.

FIG. 1

**FIG. 2**

FIG. 3

**FIG. 4**                                       **400**

For each *codeword* k=1,2,...,L

| Input image | Extract local descriptors | Find all descriptors closest to codeword k | Compute the relative frequency of the found descriptors | Set as entry *k* of the output feature vector **x** |

401      403      410      411      413      415

**FIG. 5**                                         **500**

For each *exponential box* k=1,2,...,L

| Input image | Extract local descriptors | Compute the weight relative to box *k* for each local descriptor | Sum all the weights | Set as entry *k* of the output feature vector **x** |

501      603      510      511      513      515

**FIG. 6**

<u>600</u>

Receiving a set of local descriptors derived from an image, — **605**

Obtaining K code words, wherein K > 1 — **610**

Determining a first element of a bag-of-words image feature vector by using a differentiable function having a difference between each of the local descriptors and one of the K code words as a first parameter, wherein each of the K code words is used in the differentiable function for determining a different element of the bag-of-words image feature vector — **615**

**FIG. 7**

**700**

| Receive a set of local descriptors derived from an image | 705 |

↓

| Obtaining K code words, where K > 1 | 710 |

↓

| bag-of-words image feature vectors, each having K elements and derived from a different set of local descriptors derived respectively from a different one of N training images, at least one of the N training images comprising a particular scene and at least one not comprising the particular scene, each element of each bag-of-words image feature vector is determined by using a different one of K code words, wherein N > 1, each element of one of the bag-of-words image feature vectors is determined from a differentiable function having a first parameter, which is a difference between each of the set of descriptors, from which the one of the bag-of-words image vectors is derived, and a code word used to determine the element of one of the bag-of-words image vectors | 715 |

↓

| Determine a classifier w comprising K elements by optimizing a second function having the bag-of-words image feature vectors and the classifier as parameters | 720 |

↓

| Classifying an image as including the particular scene according to the classifier | 725 |

Europäisches
Patentamt

European
Patent Office

Office européen
des brevets

# EUROPEAN SEARCH REPORT

Application Number

EP 14 30 6686

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | USMAN TARIQ ET AL: "Maximum margin GMM learning for facial expression recognition", 2013 10TH IEEE INTERNATIONAL CONFERENCE AND WORKSHOPS ON AUTOMATIC FACE AND GESTURE RECOGNITION (FG), 1 April 2013 (2013-04-01), pages 1-6, XP55169063, DOI: 10.1109/FG.2013.6553794 ISBN: 978-1-46-735544-5 * Abstract, section III, section IV * | 1-15 | INV. G06K9/46 G06K9/62 |
| X | CONRAD SANDERSON ET AL: "Towards Pose-Invariant 2D Face Classification for Surveillance", 20 October 2007 (2007-10-20), ANALYSIS AND MODELING OF FACES AND GESTURES; [LECTURE NOTES IN COMPUTER SCIENCE], SPRINGER BERLIN HEIDELBERG, BERLIN, HEIDELBERG, PAGE(S) 276 - 289, XP019081565, ISBN: 978-3-540-75689-7 * section 3 * | 1-6,8-14 | |
| A | JAN C VAN GEMERT ET AL: "Kernel Codebooks for Scene Categorization", 12 October 2008 (2008-10-12), COMPUTER VISION - ECCV 2008; [LECTURE NOTES IN COMPUTER SCIENCE], SPRINGER BERLIN HEIDELBERG, BERLIN, HEIDELBERG, PAGE(S) 696 - 709, XP019109297, ISBN: 978-3-540-88689-1 * section 3 * | 1-6,8-14 | TECHNICAL FIELDS SEARCHED (IPC) G06K |

-/--

The present search report has been drawn up for all claims

| Place of search | Date of completion of the search | Examiner |
|---|---|---|
| The Hague | 13 February 2015 | Atmatzidis, Lazaros |

EPO FORM 1503 03.82 (P04C01)

Europäisches
Patentamt

European
Patent Office

Office européen
des brevets

**EUROPEAN SEARCH REPORT**

Application Number

EP 14 30 6686

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | HONG WU ET AL: "Applying pLSA to region-based image categorization with soft vector quantization", PROCEEDINGS OF THE FIRST INTERNATIONAL CONFERENCE ON INTERNET MULTIMEDIA COMPUTING AND SERVICE, ICIMCS '09, 1 January 2009 (2009-01-01), page 102, XP055169069, New York, New York, USA DOI: 10.1145/1734605.1734631 ISBN: 978-1-60-558840-7 * section 4 * | 1-6,8-14 | |

TECHNICAL FIELDS
SEARCHED      (IPC)

The present search report has been drawn up for all claims

| Place of search | Date of completion of the search | Examiner |
|---|---|---|
| The Hague | 13 February 2015 | Atmatzidis, Lazaros |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

  ...................................................................................

& : member of the same patent family, corresponding
    document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **VLADYSLAV SYDOROV ; MAYU SAKURADA ; CH LAMPERT.** Deep Fisher Kernels End to End Learning of the Fisher Kernel GMM Parameters. *Computer Vision and Pattern Recognition,* 2014